# EUROPEAN PATENT APPLICATION

(11) **EP 0 826 640 A2**
(43) Date of publication of application: **04.03.1998**
(21) Application number: 97306052.8
(22) Date of filing: 08.08.1997
(51) Int. Cl.: C02F 7/00, C02F 3/20

(54) **A water oxygenating device**

(30) Priority: 10.08.1996 GB 9616838
(71) Applicant: Smith, Robert Howard, Walkden, Manchester M28 7EU (GB)
(72) Inventor: Smith, Robert Howard, Walkden, Manchester M28 7EU (GB)
(74) Representative: Ajello, Michael John

(57) **Abstract**

A water oxygenating device comprising an upright tubular housing (10) mounted on a base (13) close to the bottom of a body of water and having upper and lower ends open to enable water to flow upwardly therethrough. Air lift nozzles (18) and fine bubble dispersion air supply annular pipes (15 and 16) serve to generate a flow of bubbles upwardly through the tubular housing, the fine dispersion of air bubbles effecting enhanced oxygen transfer into the water throughout passage around a pair of shallow helical flights (22, 23) having an angle of approximately 10° to the horizontal. The fine bubble air diffusion commences outside of the tubuiar housing (10) to provide a gentle mixing action and thus maximum oxygen transfer within the tube where the water and oxygen interface is retained for as long as possible.

## Description

THIS INVENTION concerns a device for introducing oxygen into a body of water to enhance the quality and appearance and to control stratification by an upward plume of either natural air or oxygen enriched water.

Conventionally, oxygen transfer devices are capable of increasing the oxygen level of a body of water by something in the region of 8%. One such device comprises an upright tubular housing with a steep helical formation therewithin. The introduction of air beneath the base of the tube creates a vortex flow around the helical formation to drive the water upwardly at a velocity such that air bubbles emerge from the top of the tube with a swirling motion. The continuous current of bubble-containing water passing through the tube serves as a means for oxygen transfer. A disadvantage of this known device is the turbulence created by driving the water upwardly through the tube at appreciable velocity, disturbing any sediment, and the short period during which the bubbles are held within the stream of water thus limiting the degree of oxygen transfer.

An object of the present invention is to provide a water oxygenating device with enhanced performance requiring less energy thus to avoid excessive turbulence and the disturbance of sediment but still creating a flow to turn over the body of water for destratification.

According to the present invention there is provided a water oxygenating device comprising a tubular housing adapted to be submerged and to stand upright close to the bottom of a body of water with upper and lower ends open thus to enable water to flow upwardly therethrough, a fixed helical formation within the tube to constrain the flow in a helical path, air lift means at the base of the tube to generate said upward helical flow, and means to introduce a fine dispersion of air bubbles into the flow in the region of the base of the tube.

An embodiment of the invention will now be described by way of example only with reference to the accompanying drawings, in which:-
Fig. 1 shows, in elevation, a water oxygenating device made in accordance with the invention;
and Fig. 2 is a plan view thereof.

The device comprises a tubular housing 10 preferably of rubber coated stainless steel (316L). The base region of the tube is supported by upright struts 11 attached to horizontal struts 12 whereby the device may be screwed or otherwise fixed to a concrete base support 13. The horizontal struts 12 extend radially to inclined arms 14 which support an outer annular pipe 15 spaced upwardly from the base 13 outside and beneath the tubular housing 10. Also attached to and disposed within the vertical struts 11 at approximately the same level as the pipe 15 is an inner annular pipe 16 communicating with a diametrically disposed pipe 17 from which emerge a pair of upwardly directed air supply nozzles 18 with non-return valves, directly beneath the housing 10. The diameter of the annulus of pipe 16 is substantially equal to that of the housing 10.

An air supply pipe 20 communicates directly with the nozzles 18 and with the inner and outer pipes 15 and 16.

Centrally disposed within the tubular housing 10 is a closed column 21 also of rubber-coated stainless steel, and this forms a central support for two Archimedean screw flights 22 and 23 providing a pair of helical passages for water flowing upwardly through the tubular housing 10. The helical flights have a shallow angle, for example, in the region of 10° from the horizontal. The helical flights are also preferably of rubber coated stainless steel and the blades of the flight may be flat from the outer wall surface of the column 21 to the inner wall surface of the tube 10.

The dimensions of a typical device as described are those of an overall height in the region of 1750mm with the bottom of the tubular housing 10 spaced above the base 13 by approximately 250mm, while the outer diameter of the tube 10 is in the region of 800mm. The inner column 21 has a diameter in the region of 150mm. The pitch of each helical screw is approximately 200mm and the two screws are spaced uniformly whereby the helical passage along which the water flows is approximately 100mm in height.

In use, air is introduced into the pipe 20 at a pressure of 1½ bar and creates an emergence of airlift bubbles above the nozzles 18 thus causing water to flow into the bottom of the tubular housing 10, upwardly through the helical passages and out at the top. The air is typically supplied at approximately 35 cubic metres per hour. Simultaneously with the airlift supply, a fine dispersion of air bubbles issues from perforations in the walls of the pipes 15 and 16, those in the pipe 15 being directed inwardly in a horizontal plane, those in the pipe 16 being directed both horizontally and upwardly. Once the flow of water is created by the airlift bubbles from nozzles 18, the fine dispersion becomes entrained with the water as it passes upwardly through the helical passages. The underside of the flights may be provided with spaced radial ribs acting as protuberances to cause division and further dispersion of the air bubbles, thus further enhancing oxygen transfer.

By introducing this fine dispersion of air bubbles into the flow of water before it enters the tube and by creating a quiescent zone within the shallow helical passages, the current of water emerging from the top of the tube no longer contains the finely dispersed bubbles since, by surface contact, the oxygen therein has become mixed with the water. This transfer increases the oxygen level from the bottom to the top of the device by 15% or more. Some of the larger airlift bubbles from the nozzles 18 will emerge with the water at the top of the tube. The outer tube can have pure oxygen mixed in the main body to increase further the efficiency of the oxygen transfer.

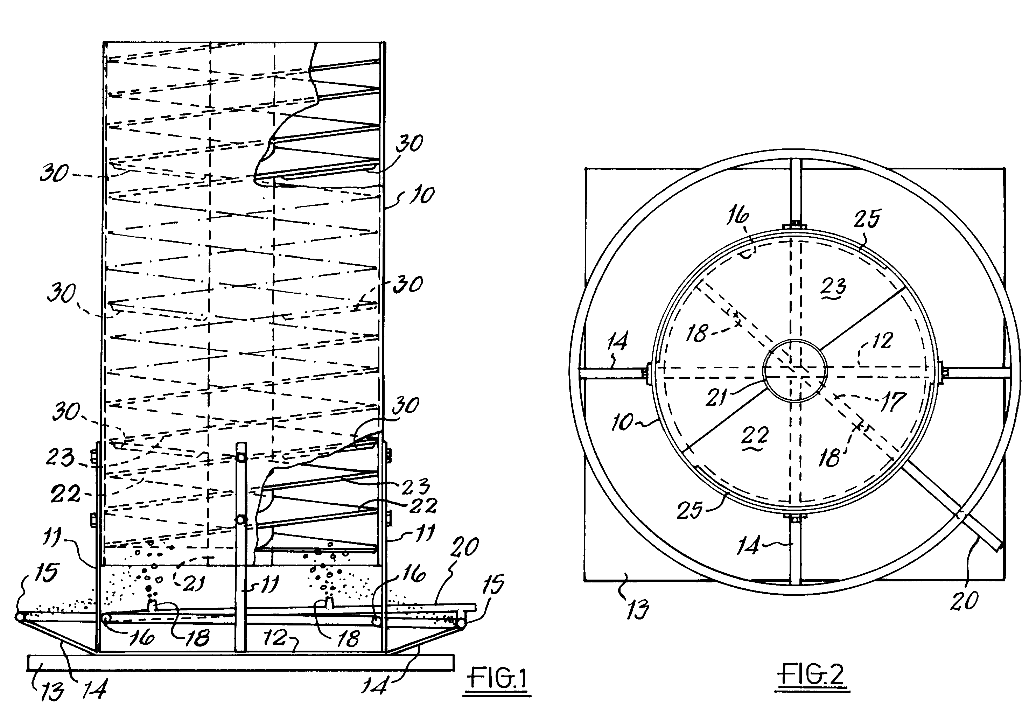

Referring particularly to Fig. 2 of the drawings it will be seen that a pair of arcuate slots 25 are cut in the outer extremity of each helical flight in a final arc of approximately 120° just prior to the upper end of the flight. This serves to release the remaining airlift bubbles in a controlled manner at the top of the device and to generate a gentle vortex within the column of water emerging therefrom.

An advantage of a device made in accordance with the invention is that fine-bubble air diffusion commences outside of the tube to provide a gentle mixing action and thus maximum oxygen transfer within the tube where the water and oxygen interface is retained for as long as possible.

A device as described may be one of several installed in a body of water. One such device will adequately serve to increase the oxygen content within a volume of water in the region of 33,500 cubic metres. The device may run continuously during those months of the year when the growth of algae is most prominent but may be reduced to perhaps one hour per day in winter. The device may be automated by providing sensing means capable of detecting the oxygen level and/or temperature of the water and providing a feed-back signal to start and stop the air supply as required in order to maintain the desired oxygen level.

## Claims

1. A water oxygenating device comprising a tubular housing adapted to be submerged and to stand upright close to the bottom of a body of water with upper and lower ends of the housing open thus to enable water to flow upwardly therethrough, a fixed helical formation within the tube to direct the flow in a helical path, air lift means at the base of the tube to generate the upward helical flow, and means to introduce a fine dispersion of air bubbles into the flow in the region of the base of the tube.

2. A water oxygenating device according to Claim 1, in which the means to introduce a fine dispersion of air bubbles into the flow is disposed outside the base of the tubular housing whereby the fine dispersion of air bubbles is entrained within a flow of water entering at the lower end of the tubular housing as generated by the air lift means.

3. A water oxygenating device according to Claim 1, wherein the air lift means comprises at least one upwardly directed air supply nozzle disposed directly beneath the tubular housing and wherein the means to introduce a fine dispersion of air bubbles into the flow comprises a perforated air supply pipe spaced outwardly from the lower end of the tubular housing and at a level beneath same.

4. A water oxygenating device according to Claim 3, wherein a pair of air supply nozzles are attached to and communicate with a common air supply pipe disposed beneath the tubular housing.

5. A water oxygenating device according to any preceding claim, wherein the air lift means and the means to introduce a fine dispersion of air bubbles into the flow, are connected to a common air supply pipe.

6. A water oxygenating device according to any preceding claim, wherein the tubular housing is supported on the means extending upwardly from a base support, the air lift means and the means to introduce a fine dispersion of air bubbles into the flow being disposed at a fixed height above the base and below the level of the lower end of the tubular housing.

7. A water oxygenating device according to any preceding claim, wherein the tubular housing contains a central upright column forming a support for two Archimedean screw flights providing a pair of helical passages for water flowing upwardly through the tubular housing, the screw flights having a shallow angle at or in the region of 10° from the horizontal, the blades of each flight being substantially flat from the outer wall surface of the central column to the inner wall surface of the tubular housing.

8. A water oxygenating device according to Claim 7, wherein the underside of the screw flights are provided with protuberances to cause a division and further dispersion of the fine dispersion of air bubbles passing upwardly through the tubular housing.

9. A water oxygenating device according to any preceding claim, wherein the means to introduce a fine dispersion of air bubbles into the flow comprises separate inner and outer annular pipes disposed respectively within and outside the bounds of the tubular housing beneath the lower end thereof, the inner annular pipe directing a fine dispersion of bubbles upwardly into the tubular housing, the outer annular pipe directing a fine dispersion of bubbles generally radially inwardly towards the lower end of the housing.

10. A water oxygenating device according to Claim 7 or Claim 8, including a pair of arcuate slots cut in the outer extremity of each screw flight in a final arc of approximately 120° just prior to the upper end of the flight, thus to release air lift bubbles in a controlled manner at the top of the device and to generate a gentle vortex within the column of water emerging therefrom.

11. A water oxygenating device according to any preceding claim, including sensing means capable of detecting the oxygen level and/or temperature of the water and providing a feed-back signal to control the air supply as required in order to maintain a desired oxygen level in the water.
